# EUROPEAN PATENT APPLICATION

(11) **EP 2 639 566 A1**
(43) Date of publication of application: **18.09.2013**
(21) Application number: 12159055.8
(22) Date of filing: 12.03.2012
(51) Int. Cl.: G01M 1/04, B60B 30/08

(54) **Wheel-clamping device for a wheel-service-machine and method for reversibly clamping a wheel on a wheel-clamping device for a wheel-service-machine**

(71) Applicant: Snap-on Equipment Srl a unico socio, 42015 Correggio (RE) (IT)
(72) Inventor: Sotgiu, Paolo, 41100 Modena (IT)
(74) Representative: Eisenführ, Speiser & Partner

(57) **Abstract**

The wheel-clamping device comprises a frame (20) having a through-opening (22), and a spindle (30) being rotatably supported in the through-opening (22), the spindle (30) has a through-hole (32) and an external thread (34) on an external circumferential portion. The wheel-clamping device comprises a sleeve (50) with a turntable (58) for the wheel to be clamped, wherein the sleeve (50) has an internal thread portion (52) which is in threaded engagement with the external thread-portion (34) of the spindle (30). Furthermore, a stopping or holding means (70) is able to temporarily hold the sleeve (50), and a clamping means (60) for the temporarily fixation of a fixing element (40).

## Description

The present invention concerns a wheel-clamping device for wheels on turntables of wheel-service-machines with only one drive unit and further a method for clamping wheels on a wheel-clamping device of wheel-service-machines with only one drive unit.

A wheel-mounting-device to which a rim of a motor vehicle wheel can be fixed is known from EP patent 2 110 270. The rim can be rigidly connected to the wheel mounting device. Further, the rim can be centered onto a center axis of a wheel fixing means.

It is further known from US patent 5,244,029 to use a cone for the securing and centering of a motor vehicle wheel on a resting flange. Said cone is screwed manually about a hollow externally threaded securing shaft, protruding above the flange the wheel is placed onto.

In the known devices and methods described shortly above, a rim of a tyre can be fixed on a turntable by an additional actuator device. Said additional actuator device can for example be driven by a pneumatic actuator, a hydraulic actuator, an electric motor, a combustion engine or the like. The additional actuator device makes a wheel-service-machine more expensive, and further the use of additional actuators bears an increased risk of machine failure. Moreover, even an additional actuator driven manually by a hand force of the user can be used. The mounting of the wheel to be serviced onto the wheel-service-machine done manually by hand can be supported by means of levers or the like, for example by inserting a cone through a center hole of the rim and further into a threaded engagement with the turntable. The usage of a manual actuator for adjustment of the rim onto a turntable does not bear any increased risk of machine failure, but the procedure of adjusting is more time consuming than an automated procedure. Further, the mounting of the wheel onto the wheel-service-machine by hand is not user-friendly, especially when a large amount of wheels has to be serviced, which means mounted, balanced or the like.

Therefore, the object of the present invention is to overcome the drawbacks of the known art by providing a wheel-clamping device for a wheel-service-machine being able to quickly clamp a rim on a wheel-service-machine with only one drive unit, and without the need for additional actuating means.

In the case of the apparatus, the drawbacks of the known art are overcome by the features of claim 1.

The innovative wheel-clamping device for a wheel-service-machine according to the present invention comprises a frame having a through-hole, and a spindle being rotatably supported in the through-hole of the frame. Further, the spindle has a mounting-side end being provided with an opening, and a driving-side end. The spindle is connectable at its driving-side end to a drive means which is provided for a rotary movement for the spindle, wherein the spindle has an external thread on an external circumferential portion. Moreover, the wheel-clamping device comprises a sleeve with a turntable for the wheel to be temporarily clamped, wherein the sleeve has an internal thread portion which is in threaded engagement with the external thread-portion of the spindle. Furthermore, stopping/holding means are able to at least temporarily hold the sleeve, and clamping means for temporarily fixing a fixing element to the spindle are provided, wherein the fixing element is inserted into the mounting-side opening of the spindle.

The drive means, which is provided for a rotary movement for the spindle, can rotate the spindle in a first rotating direction, as well as in a second rotating direction. Moreover, by means of the threaded engagement of spindle and sleeve, the spindle is able to rotate the sleeve in the first rotating direction, as well as in the second rotating direction. Furthermore, the innovative wheel-clamping device can be used as a self-centering and blocking device.

In an embodiment of the present invention, the frame is cylindrical, and the sleeve is rotatably supported on the frame via a bearing.

In another embodiment, the sleeve has a turntable part and a thread part, wherein the turntable part is adapted to be movable in its axial direction. The turntable can be located adjacent to the turntable part. Furthermore, the turntable part describing a portion of the sleeve being movable in axial direction, can be adapted to support the turntable.

In another embodiment of the present invention, the stopping/holding means can comprise at least one clutch pack. Further, the at least one clutch pack can be hold by a holder. The holder which is s part of the stopping/holding means can preferably be supported by an arm being pivotally connected to the frame. Furthermore, the holder itself can be actuated for example by pneumatic actuators, by hydraulic actuators, by magnetic or solenoid actuated means, by hand force, or by any other actuating principle that enables the holder to hold the at least one clutch pack. The clutch pack can consist for example of a first clutch and a second clutch, but can also comprise more clutches.

The at least one clutch pack applies a first amount of frictional forces onto the sleeve while rotating in a first rotating direction, and the at least one clutch pack applies a second amount of frictional forces onto the sleeve while rotating in a second rotating direction, and wherein the second amount of frictional forces is greater than the first amount of frictional forces. Moreover, also more than one clutch pack, in particular two or more clutch packs, can be provided with the inventive wheel-clamping device. Thereby, with a variety of clutches working in different rotating directions, the frictional force that the variety of clutches is able to apply may be increased.

In an embodiment of the present invention, the sleeve is connectable to the frame via the stopping/holding means, and the stopping/holding means is adapted to be actuated by an actuator means. The actuator means may comprise at least one actuator spring or at least one fluid driven actuator or at least one mechanical or electrical driven actuator as well as any possible combination thereof.

In another embodiment of the present invention, the clamping means is adapted to be actuated by a movement of the sleeve. Said movement may be a linear movement of the sleeve along the middle axis of the spindle.

Moreover, the clamping means comprises at least one clamping claw and at least one clamping claw actuator. Furthermore, the spindle provides at least one spindle recess extending in at least an axial direction of the spindle to house the clamping means. The spindle recess can further extend in circumferential direction, and its geometrical form can comprise a notch, a curved slot or any other possible geometry adapted to house the clamping means.

Furthermore, the two clamping means can be provided and arranged to each other in a position of 180° referred to the circumferential direction of the spindle. However, also more than two clamping means can be arranged at even angular distances referred to the circumferential direction of the spindle.

In case of the method, the drawbacks of the known art can be overcome by the features of claim 10.

The method for reversibly clamping a wheel on a wheel-clamping device for a wheel-service-machine uses the wheel-clamping device for a wheel-service-machine as claimed in claim 1. Further, the method comprises that a rotation of the spindle in a first rotating direction moves the sleeve, which is temporarily rotationally held by the stopping/holding means, in a direction towards the wheel. Thereby the clamping means is actuated to let loose of the rim by the fixing element.

According to the inventive method of the present invention, it is possible to fulfill the function of clamping a wheel with the wheel-clamping device of the wheel-service-machine only by means of the main rotating force, provided by a drive means for a rotary movement, provided generally to drive wheel-service-machine itself.

In a preferred embodiment of the present invention, the spindle can rotate the sleeve in the first rotating direction and in the second rotating direction.

In another aspect of the present invention, the stopping/holding means comprise at least one clutch pack, and wherein the at least one clutch pack applies a first amount of frictional forces onto the sleeve while rotating in a first rotating direction, and the at least one clutch pack applies a second amount of frictional forces onto the sleeve while rotating in a second rotating direction, and wherein the second amount of frictional forces is greater than the first amount of frictional forces.

Furthermore, the clamping means is adapted to be actuated by the movement of the sleeve. Said movement may be a linear movement of the sleeve along the middle axis of the spindle.

Moreover, the clamping means comprise at least one clamping claw and at least one clamping claw actuator, and the sleeve acts on the at least one clamping claw actuator.

This can be done by means of a recess cut in the sleeve, being adjacent to the clamping means.

In another preferred embodiment of the present invention, the at least one clamping claw actuator which is actuated by the movement of the sleeve, actuates the at least one clamping claw to clamp the fixing element.

In another embodiment of the present invention, the at least one clamping claw is adapted to be spring loaded by a spring, and the at least one clamping claw tends to engage a threaded rod which is a part of the fixing element, as a result of the spring load.

Based on the consideration that no external force or means is used for the clamping process of the wheel on the turntable by means of the method for reversibly clamping a wheel on a wheel-clamping device, the present invention seeks to use the rotary movement of the drive means, which in any way has to be present in wheel-service-machines, for actuating the wheel-clamping device.

Therefore, the wheel is placed onto the wheel-service-machine, in particular onto the turntable, which is in general the outermost part of the wheel-service-machine in a direction away from the main and only drive means. In case, the spindle is arranged vertically, the turntable is located generally on the uppermost part of the wheel-service-machine in the direction away from the main drive means. Further a fixing element is guided through a center hole of the wheel rim and inserted in the inner tubular opening of a drive spindle on a mounting-side end thereof, the spindle is rotationally driven by the main rotary movement of the drive means.

Said main rotary movement of the drive means can partially be transformed from a solely rotary movement into a linear movement. This partially transmission of a main rotary movement, initiated by the drive means, into a linear movement can for example be performed by a threaded engagement, by a system using centrifugal forces, produced by the rotating movement, in combination with a part like a cone where two or more transmission partners can slide on, by a system comprising a threaded engagement of two or more engagement partners, by a system using a pinion engaged in a toothed surface, or further by any arrangement of parts allowing the transmission of a rotary movement into a linear movement. In the preferred embodiment of the present invention, the partial transmission of a rotary movement into a linear movement is in general done by means of a threaded engagement of engagement partners, in particular by two engagement partners.

A first of said engagement partners is directly connected to the main rotary movement, which is provided by the drive means, and fulfills the equal main rotating movement. Its axial position referring to a center axis of the engagement partner is fixed. For fulfilling a rotary movement, the first engagement partner can be rotationally supported in a housing, a tubing, a pedestal or the like. Therewith, in a preferred embodiment of the present invention, the first engagement partner is embodied by the spindle.

A second engagement partner, being in threaded engagement with the first engagement partner is, at least for a time-period of establishing a solid connection between first and second engagement partner, rotationally fixed by the stopping/holding means, but not axially fixed. This rotation-fixation can for example be carried out by the frictional clutch, by magnetic forces, by a spring-loaded catch or fence, or any other arrangement of parts allowing the second engagement partner to move in an axial direction and further inhibiting its rotary movement during a connection process of first and second engagement partners. Therewith, the rotary movement of the first engagement partner forces the second engagement partner to move in a direction along the center axis of the threaded engagement. The direction, in which the second engagement partner is forced to move along said center axis, can depend on the screwing-direction, which means the direction of the rotary movement, and further on the kind of thread, which can be a left-hand thread or a right-hand thread. Therewith, in a preferred embodiment of the present invention, the second engagement partner is embodied by the sleeve.

The generated linear movement of the second engagement partner can be used to clamp the rim lying on the turntable of the wheel-service-machine against a first end of the fixing element. Therefore, the second engagement partner can be moved along its center axis towards the direction of the wheel rim. Therewith, the second engagement partner presses the turntable against the rim, and the rim presses further against the first end of the fixing element. In a preferred embodiment of the present invention, the fixing element is rotationally symmetrical. The first end of the fixing element can have a conical form, a second end can comprise a rod. In case, the first end of the fixing element has a conical form, the smaller diameter of the conical form is adjacent to the second end of the fixing element. Further, the linear moving of the second engagement partner can be used to press the linearly moving second engagement partner against the rim, and the rim against the conical first end of the fixing element, being adjacent to the rod. Thereby, the conical form of the fixing element is adapted to perform a centering task onto the rim, because the conical form centers the center hole of the rim.

The linear movement of the second engagement partner can be used to actuate the clamping means. The actuation of the clamping means can for example be performed by a recess provided in a surface of the second engagement partner being adjacent to the clamping means. Said recess can be conducted circumferentially, annular, segment-wise, or in any other possible geometrical form cut in the surface of the second engagement partner being able to contact the clamping means, for example on the inside surface of the second engagement partner. Further, also a protrusion provided on the surface being able to contact the clamping means can be used to actuate the clamping means. Generally, the second engagement partner provides a geometrical feature on its surface being able to contact the clamping means, which can be used to actuate the clamping means.

The clamping means itself are located on the first engagement partner, which can be the drive spindle. Furthermore, the clamping means are located for example in notches, cut in the first engagement partner and can be extended in an axial direction of the first engagement partner itself.

Moreover, the clamping means can comprise the clamping claw actuator, which is actuated by the second engagement partner. The clamping claw actuator of the clamping means can itself be able to actuate the clamping claw means. The clamping claw means can be able to clamp the fixing element inside the tubular opening of the drive spindle. In a further embodiment of the present invention the clamping claw can comprise a pin being able to engage a pin hole cut in the fixing element. Said clamping claw means being able to clamp the fixing element can be a spring, a spring-loaded bolt or anchor, a plain clamp, a spring loaded clamp, an internal threaded circular, semicircular or segmental clip or junction, chuck jaws which can also be spring loaded, or any other arrangement which is able to clamp the fixing element inside a tubular opening. Moreover, also a clamping means can be provided, where the second engagement partner directly actuates the clamping claw means itself. With an arrangement like this, no further clamping claw actuator is needed.

The clamping means can be actuated by the second engagement partner, and are adapted to temporarily clamp the fixing element which is guided in the inside of the first engagement partner. Furthermore, the clamping means generally rotate with the rotating spindle Therefore, the notches to locate the clamping means have to have a passage from the outside surface of the spindle, to the inside surface of the spindle to enable the clamping means to be actuated by the second engagement partner on the outside surface of the spindle, and to temporarily clamp the fixing element which is located inside the spindle.

After a successfully performed clamping process between fixing element and clamping means, the clamping means, generally rotating with the rotating spindle, are connected to the fixing element. As already mentioned above, the fixing element is initially guided through a center opening of the rim into an opening of the pedestal of the wheel-service-machine. Further, the fixing element establishes the connection of the rim of the tyre to be serviced with the main driving force via the connection with the clamping means, established by the clamping process.

While the second engagement partner travels in axial direction along its center axis, caused by the rotary movement of the first engagement partner, the second engagement partner reaches a compressed contact with the wheel rim and the conical part of the fixing element. In case the second engagement partner is willing to move up further, the pressure onto the rim increases, therewith the friction force in the threaded engagement of first and second engagement partner increases, too. In case the frictional force between first and second engagement partner exceeds a predetermined force which may be a threshold, which can for example be set dependent on the material properties of the rim, the stopping/holding means, in particular the clutch pack, is forced to loose connection with the second engagement partner.

In a preferred embodiment of the present invention, this can for example be done by employment of the frictional clutch as already mentioned above. The usage of a frictional clutch provides furthermore the advantage, that no additional actuation means has to be used. In case the frictional force between first and second engagement partners exceeds the predetermined threshold force, the clutch looses the frictional contact with the second engagement partner, and the second engagement partner follows the main rotary movement of the first engagement partner.

Therewith, the travelling distance, which means the length the second engagement partner is able to move along the direction along its center axis, can depend on the maximum pressure which can be exerted on the rim, the maximum friction force in the threaded engagement together with the predetermined threshold value for the friction force in the clutch, as well as the length of the threaded engagement of first and second engagement partners.

Further, the present invention supports an apparatus for a wheel-service-machine, not demanding additional actuating forces or hand forces of the user.

A method like the one present in the invention provides the user with a fully automatic method for fixing a tyre or rim on a pedestal of a wheel-self-machine without any additional processing steps demanded from the user.

Furthermore, because of the absence of additional actuating parts, the present invention reduces a possible error rate by disclosing a failure proof system for fixing a rim or wheel on a wheel-service-machine.

With an arrangement like the one present in the present invention, the main rotary driving force can be used first for initiating the connection process of first and second engagement partners. Further, the generated linear movement of the second engagement partner enables the clamping means to clamp the fixing element. During the linear movement of the second engagement partner, the turntable is further pressed against the fixing element, which leads to a clamping and centering process of the rim being placed onto the turntable. A further advantage of the present invention is the fact, that only one rotary movement is used to initially clamp the fixing element by the clamping means in and onto the drive spindle of the rotary driving force, and the same rotary movement is set further to directly run a wheel-service-machine in its procedural run. The main rotating force can be brought to a halt between the clamping and centering process of the wheel-clamping device of the rim onto the turntable and the procedural run, but this halt is not obligatory. On the contrary, the fact that the same rotary movement can be used for the wheel-clamping as well as for the procedural run on the wheel-service-machine accelerates the process time of a wheel-service-process, for example mounting and demounting of a tyre onto the rim, wheel balancing or the like.

Other advantages and one embodiment of the present invention shall now be described with reference to the attached drawings. The terms "top", "bottom", "up", "low", "left" and "right" used when describing the embodiment, relate to the drawings orientated in such a way that the reference numerals and name of the figures can be read normally.
- Fig. 1: shows a cross-sectional view of an inventive wheel-clamping device for wheels on a turntable of a wheel-service-machine in a released state; and
- Fig. 2: shows the cross-sectional view of the inventive wheel-clamping device of Fig. 1 in a locked state
- Fig. 3: shows a detailed view A of a clamping claw means being provided on the inventive wheel-clamping device shown in Fig. 1.

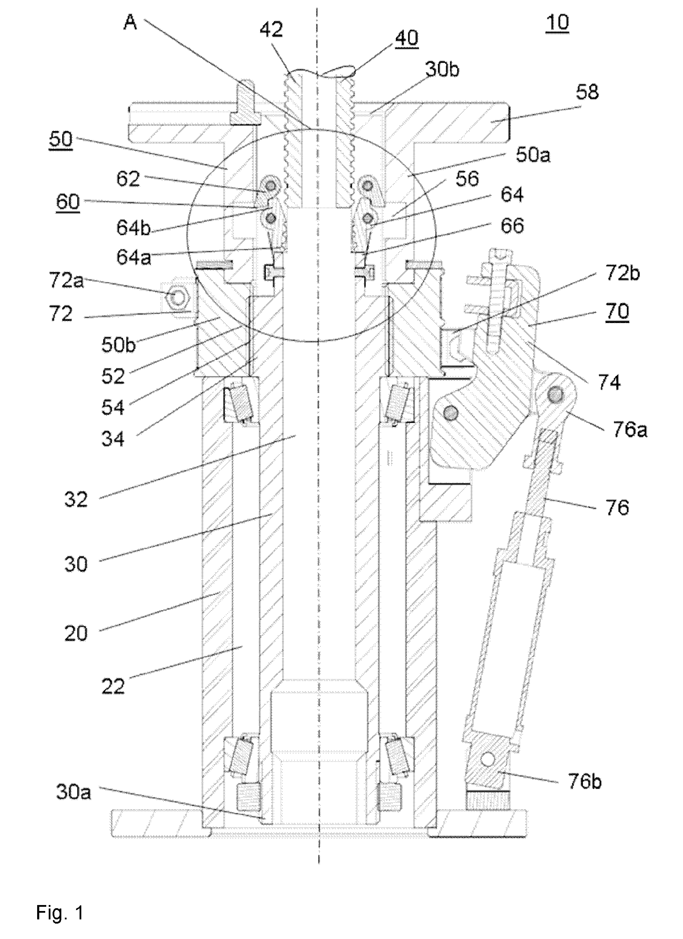

The inventive wheel-clamping device 10 as shown in Fig. 1 comprises as main components a frame 20, a spindle 30, a fixing element 40 for temporarily fixing a rim R of a wheel at which a tyre is to be mounted or dismounted, to the wheel-clamping device 10, a sleeve 50, clamping means 60, and stopping/holding means 70, respectively. In the following, these components will be described in detail.

Frame 20 is formed by a cylindrical tube made preferably from steel. Tubular frame 20 which can be attached rigidly to a machine frame of a wheel-service-machine (not shown) being provided with the inventive wheel-clamping device 10, rotatably supports spindle 30 inside of its cylindrical through-opening 22 for example by roller bearings.

Spindle 30 which is also preferably made from steel, is connected to a driving unit, which is not shown in Fig. 1. The driving unit can be formed by an active driving device. Preferably, the driving device is an electric motor which is also used for driving the wheel-service-machine at which the inventive device 10 is provided. Moreover, the driving device is able to drive spindle 30 in a first rotation direction, as well as in a second rotating direction.

It has to be noted that spindle 30 is arranged in Fig. 1 in a vertical orientation. However, spindle 30 as well as the whole wheel-clamping device 10 can also be arranged in a horizontal orientation or in any other orientation between the horizontal and vertical orientation.

Spindle 30 has a driving-side end 30a, a mounting-side end 30b and a cylindrical through-hole 32 having at least substantially a circular cross-section. At driving-side end 30a, spindle 30 is detachably coupled to the not-shown driving device. For said purpose, the diameter of through-hole 32 extending from driving-side end 30a, is larger than the diameter of through-hole 32 extending from mounting-side end 30b. Mounting-side end 30b faces to the location at which rim R of the wheel to be serviced, for example to be mounted with or to be demounted from a tyre, is placed.

An external thread-portion 34 is provided in the upper half of the axial length of spindle 30. For said purpose, spindle 30 is provided with an outer surface portion 30c, the diameter of which is larger than the diameter of spindle 30 along its remaining axial length. The offset formed thereby, is used for retaining one of the bearings rotatably supporting spindle 30 within frame 20. Moreover, above outer surface portion 30c, one or more recesses 30d are provided in the outer surface of spindle 30. In case one recess 30d is provided in the outer surface of spindle 30, recess 30d can be circumferential. In case two recesses 30d are provided in the outer surface of spindle 30, recesses 30d are arranged to each other in a position of 180°, referred to the circumferential direction of spindle 30. Recesses 30d serve to house clamping means 60 described later.

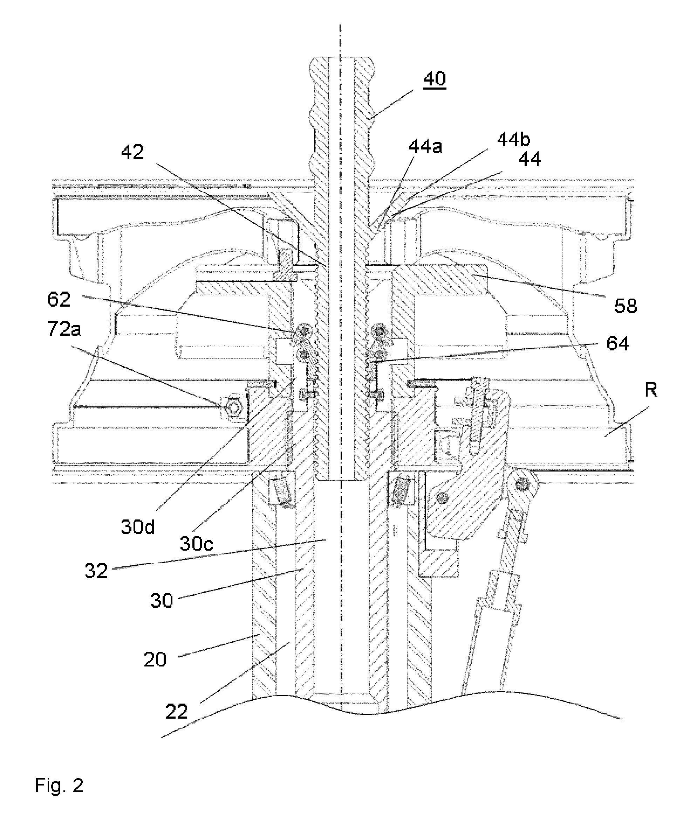

Fixing element 40 comprises a threaded rod 42 being connected fixedly to a centering cone 44, both arranged along the center axis of fixing element 40 such that cone 44 is located above threaded rod 42. Further, as can be seen in Fig. 2, the end surface of cone 44 having a smaller diameter than the other end surface of cone 44 is rigidly attached to the upper end surface of threaded rod 42. In other words, threaded rod 42 is adjacent to a first end 44a of centering cone 44 being smaller than a second end 44b of the centering cone 44. Moreover, the diameter of the second end 44b of the centering cone 44 which is wider than the first end 44a of the centering cone 44, is bigger than the diameter of through-hole 32 of spindle 30. The center axis of fixing element 40 is coaxial to the center axis of spindle 30 and sleeve 50. Fixing element 40 is preferably made from steel.

Threaded rod 42 of fixing element 40 can be inserted through a central hole of rim R of the wheel being placed onto a turntable 58 of sleeve 50 described later, and further into through-hole 32 of spindle 30 along the center axis of spindle 30. According to this movement, first end 44a of centering cone 44 being smaller than its second end 44b, and being adjacent to threaded rod 42, comes in firm contact with the central hole of wheel detachably rim R in order to fix rim R onto turntable 58 of sleeve 50.

The sleeve 50 surrounds the upper part of the external surface of spindle 30 at which external thread-portion 34 is provided in the upper half of the axial length of spindle 30. The center axes of spindle 30 and sleeve 50 coincide with each other and also together with said of frame 20. Sleeve 50 is rotatably supported onto frame 20 by a bearing arrangement. Further, sleeve 50 extends along the center axis away from frame 20. Moreover, sleeve 50 is preferably made from steel.

Sleeve 50 comprises an internal thread-portion 52 provided in the lower part of the axial length of sleeve 50, as can be seen in Fig. 1. Internal thread-portion 52 of sleeve 50 is located at the same axial height along the center axis as external thread-portion 34 of spindle 30. Furthermore, internal-thread portion 52 of sleeve 50 is in engagement with external thread-portion 34 of spindle 30 in a threaded coupling 54. Said coupling 54 is used for the purpose of actuating clamping means 60 as described later.

At the upper end 50a of circular sleeve 50 which is adjacent to mounting-side end 30b of spindle 30, a turntable 58 is provided rigidly connected to sleeve 50. On turntable 58 rim R of the wheel to be serviced can be placed.

Sleeve 50 that partially surrounds spindle 30, provides a recess 56 on its internal surface at an axial position adjacent to clamping means 60. In an initial state in which spindle 30 is not rotated, the axial position of the recess 56 is lower than the axial position of clamping means 60.

As already mentioned above, clamping means 60 are arranged in recesses 30d of spindle 30. Clamping means comprise in each recess 30d a clamping claw actuator 62 which is able to actuate a clamping claw 64.

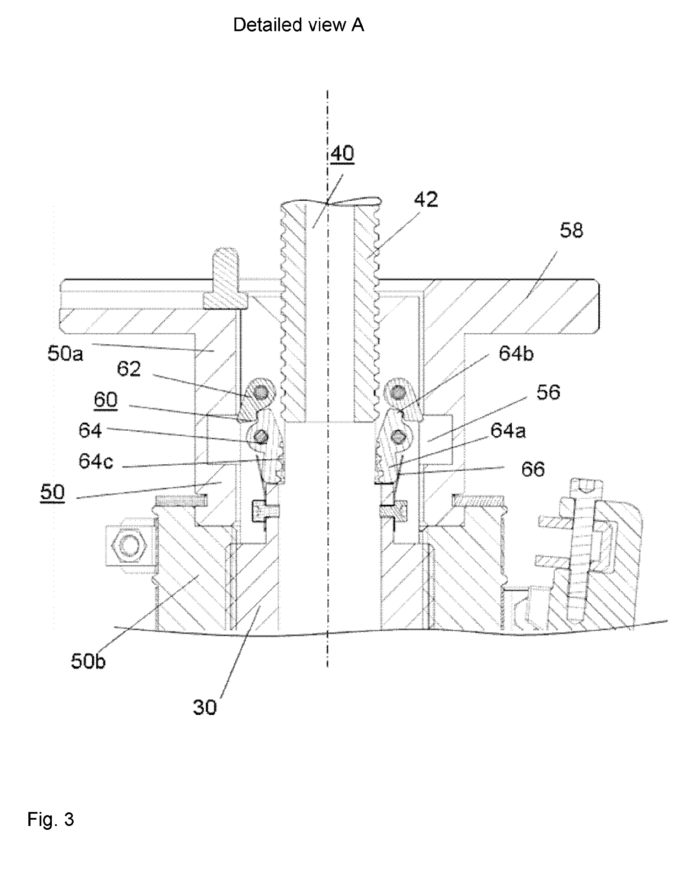

As can be seen in Fig. 3, clamping claw actuator 62 of each clamping means 60 is located mainly on the external surface of spindle 30 facing the internal surface of sleeve 50, while clamping claw 64 is provided mainly on the internal surface of spindle 50. Moreover, clamping claw 64 is spring loaded on its lower end by a spring 66 in a direction to the outside of spindle 30. A lower end 64a of clamping claw 64 has a threaded surface being adjacent to the internal surface of the spindle 30. As a result of the spring load, the part of clamping claw 64 facing the internal surface of spindle 30 and having a threaded surface, tends to engage the threaded surface of threaded rod 42. Clamping claw actuator 62 which is put under pressure by the internal surface of sleeve 50, puts pressure on an upper end 64b of clamping claw 64. Thereby, lower end 64a of the clamping claw 64 is tilted away from threaded rod 42, and thus, clamping claw 64 is not able to engage threaded rod 42 inside the through-hole 32 of spindle 30 with its spring loaded lower end. Thus, in an initial state with no movement of sleeve 50 in axial direction, fixing element 40 can be moved unresistingly inside through-hole 32 of spindle 30.

In order to clamp fixing element 40 in through-hole 32 of the spindle 30, clamping means 60 have to clamp threaded rod 42 of fixing element 40. Therefore, clamping claw actuator 62 of each clamping means 60 has to loose its pressure on the upper end 64b of clamping claw 64. This enables the spring loaded clamping claw 64 to engage threaded rod 42 of fixing element 40.

To enable clamping claw actuator 62 to loose its pressure on clamping claw 64, recess 56 cut in sleeve 50 has to move, together with sleeve 50, such that the internal surface of sleeve 50 does not further put clamping claw actuator 62 under pressure. In order to allow sleeve 50 to undergo a movement in axial direction, the sleeve is connected to stopping/holding means 70.

Stopping/holding means 70 comprise a clutch pack 72 which is shown in Fig. 1, which surrounds an axial section of the outer surface of sleeve 50. A holder 74 being part of the stopping/holding means 70 holds clutch pack 72 on a rotationally fixed position. Clutch pack 72 itself applies frictional forces onto sleeve 50 which is thereby rotationally fixed, too. Holder 74 is further provided on a holder-side end 76a of a pivoting arm 76, while a frame-side end 76b of the pivoting arm 76 is pivotably connected to tubular frame 20. Moreover, holder 74 is preferably made from steel. Clutch pack 72 is in general made from steel, too, but can additionally be provided with friction pads or the like having material properties which allow clutch pack 72 to apply frictional forces up to a predetermined amount.

As already mentioned above, clutch pack 72 is generally disposed surrounding the circumference of an axial section of the outer surface of sleeve 50, whereas the inner surface of clutch pack 72 touching the circumference of the lower part of sleeve 50. Further, clutch pack 72 comprises a first clutch 72a and a second clutch 72b, being arranged adjacent to each other along the axial direction of sleeve 50 center axis. First clutch 72a applies frictional forces onto sleeve 50 when spindle 30 rotates in the first rotating direction. Thereby, sleeve 50 shall be driven in the first rotating direction, too, because of its threaded engagement with spindle 30.

In case, sleeve 50 shall be driven by spindle 30 in the second rotating direction, second clutch 72b applies frictional forces onto sleeve 50. Generally, the frictional forces which can be applied from second clutch 72b are higher than the frictional forces, first clutch 72a is able to apply.

The inventive device 10 operates as follows:

### LOCKING AND OPERATIONAL RUN

The wheel to be serviced is placed onto turntable of the inventive wheel-clamping device 10 being in a released state as shown in Fig. 1. Next, threaded rod 42 of fixing element 40 is guided through the central hole of rim R into through hole 32 of spindle 30 (see Fig. 2). Thereby, threaded rod 32 slides into through hole 32 without resistance, whereby first end 44a of centering cone 44 comes in firm contact with the central hole of rim R.

In case spindle 30 starts to rotate in the first rotating direction, sleeve 50 which is rotationally fixed by clutch pack 72, in particular by first clutch 72a hold by holder 74, moves along the center axis in the direction to mounting-side end 30b of spindle 30. Thus, sleeve 50 performs a linear movement along the center axis of spindle 30 caused by threaded engagement between spindle 30 and sleeve 50 and the rotation of spindle 30. In particular, sleeve 50 is not able to follow the rotary movement of spindle 30 since sleeve 50 is hold in angular position by the frictional contact caused by stopping/holding means 70, in particular by first clutch 72a, supported by holder 74. Second clutch 72b is not employed while spindle 30 rotates in the first rotating direction. Since turntable 58 is rigidly connected to sleeve 50, turntable 58 is forced to follow the linear movement of sleeve 50 induced by the rotating movement of spindle 30.

As already mentioned above, recess 56 is provided on the inner surface of sleeve 50. The axial position of recess 56 is adjacent to the axial position of clamping means 60. The linear movement of sleeve 50 resulting from the screwing movement of the spindle 30, contains also a linear movement of recess 56. Therewith, as a result of the linear movement of sleeve 50, the axial position of recess 56 coincides with the axial position of clamping claw actuator 62 on the external of spindle 50.

Therewith, clamping claw actuator 62 is no longer pressed against clamping claw 64, because clamping claw actuator 62 moves outwardly in recess 56 which is cut in inside surface of sleeve 50, as already mentioned above. This movement of clamping claw actuator 62 allows spring loaded clamping claw 64 to threadingly engage threaded rod 42. Thereby, threaded rod 42, being part of fixing element 40, is fixed in through-hole 32 of spindle 30.

As described above, the screwing movement of sleeve 50 moves also turntable 58, which is provided rigidly connected to sleeve 50 and is adjacent to mounting-side end 30b of spindle 30, and is thereby pressed against wheel rim R. Wheel rim R itself is thereby pressed against centering cone 44. This linear movement of sleeve 50, together with wheel rim R against centering cone 44 also centers wheel rim R onto the center axis.

Thereby, the linear movement of sleeve 50 towards the axial direction of mounting-side end 30b of spindle 30 initiates a process of clamping fixing element 40, and further, simultaneously initiates a process of centering rim R onto center axis of spindle 30 and fixing element 40.

As soon as the rotary movement in the first rotating direction, applied by drive means onto spindle 30, overcomes a predetermined driving force, the frictional contact between clutch pack 72, in particular first clutch 72a, which is hold in angular position by holder 74, and sleeve 50 gets loose. Then, sleeve 50 follows directly the rotating movement in the first rotating direction, initiated by spindle 30. Thereby, sleeve 50, which is now rigidly connected to spindle 30 and no longer hold in angular position by stopping/holding means 70, can follow the rotary movement of spindle 30, and the operation run can immediately follow the reversion of fixation of spindle 30 and sleeve 50. This further rotating movement can now be used for performing a wheel-service-operation on the wheel-service-machine, for example a tyre-changing procedure on a tyre-changing machine in which a tool is penetrating the wheel.

Thus, the rotating movement of spindle 30, initiated by the drive unit, is firstly used and transformed by a transmission in the linear movement of sleeve 50 to actuate clamping means 60 to clamp fixing element 40, and thereby to fix rim R of the wheel rigidly to drive spindle 30. Fig. 2 shows the locked state of the inventive wheel-clamping device 10.

### UNLOCKING AND RELEASING THE RIM

After finishing the operation run on the wheel-service-machine, fixing element 40 has to be unlocked from sleeve 50 prior to removing the wheel with its wheel rim R from turntable 58.

Therefore, spindle 30, starting from a non rotating halt-position, has to be rotated in the second rotating direction. As soon as spindle 30 initiates a driving movement onto sleeve 50 in the second rotating direction, stopping/holding means 70, in particular second clutch 72b, applies frictional forces onto sleeve 50 against the initiated rotary movement driven by spindle 30. First clutch 72a is not employed while spindle 30 rotates in the second rotating direction. Thus, the rotary movement in the second rotating direction, applied onto sleeve 50 by spindle 30, leads to a linear movement of sleeve 50 along the center axis of spindle 30 in the direction of its driving-side end 30a. The linear movement is induced by the rotating movement of spindle 30 being threadingly engaged with sleeve 50, while sleeve 50 is rotationally fixed by second clutch 72b, supported by holder 74. Generally, the frictional forces needed for releasing threaded coupling 54 are higher than the frictional forces needed for engaging threaded coupling 54. Therefore, the forces which can be applied from second clutch 72b are higher than the frictional forces, first clutch 72a is able to apply.

Turntable 58, being rigidly connected to sleeve 50, follows the linear movement of sleeve 50, thereby the pressure from turntable 58 onto wheel rim R and centering cone 44 decreases.

Further, recess 56, being located on inner surface of sleeve 50 moves with the linear movement of sleeve 50 in the direction of driving-side end 30a, away from the mounting-side end 30b. So, the inner surface of sleeve 50 slips over clamping claw actuator 62 again. Thereby, the inner surface of sleeve 50 presses against clamping claw actuator 62, which itself presses on upper end 64b of clamping claw 58. This leads to the fact, that spring loaded lower end 64a of clamping claw 64 is lifted out of its threaded engagement with threaded rod 42.

As soon as lower end 64a of clamping claw 64 is lifted out of its threaded engagement with threaded rod 42, fixing element 40 is no longer clamped in through-hole 32. Additionally, as already mentioned above, centering cone 44 is no longer set under pressing force, because turntable 58 and wheel rim R being placed onto, follow the linear movement of sleeve 50 along the center axis of spindle 30 in the direction of its driving-side end 30a.

As a result of the linear movement of sleeve 50, initiated by a rotation of spindle 30 in the second rotating direction, fixing element 40 can be removed from through-hole 32 of spindle 30, and rim R can be lifted away from turntable 58. Therewith, the inventive wheel-clamping device 10 reaches released state, as shown in Fig. 1.

### List of References

- 10: Wheel-clamping device
- R: rim of a wheel
- 20: frame
- 22: through opening
- 30: spindle
- 30a: driving-side end
- 30b: mounting-side end
- 30c: outer surface portion
- 30d: recess
- 32: through hole
- 34: external thread-portion
- 40: Fixing element
- 42: threaded rod
- 44: centering cone
- 44a: 1^{st} end of cone
- 44b: 2^{nd} end of cone
- 50: sleeve
- 50a: upper end of sleeve
- 50b: lower end of sleeve
- 52: internal thread-portion
- 54: threaded coupling
- 56: recess
- 58: turntable
- 60: clamping means
- 62: clamping claw actuator
- 64: clamping claw
- 64a: lower end of clamping claw
- 64b: upper end of clamping claw
- 64c: threaded surface of lower end of clamping claw
- 66: spring
- 70: stopping/holding means
- 72: clutch pack
- 72a: 1^{st} clutch
- 72b: 2^{nd} clutch
- 74: holder
- 76: pivoting arm
- 76a: holder-side end of pivoting arm
- 76b: frame-side end of pivoting arm

## Claims

1. A wheel-clamping device for a wheel-service-machine, comprising:
a frame (20) with a through-hole (22),
a spindle (30) being rotatably supported in the through-hole (22) of the frame (20), wherein the spindle (30) has a mounting-side end (30b) being provided with an opening, and a driving-side end (30a), wherein the spindle (30) is connectable at its driving side end to a drive means provided for a rotary movement of the spindle (30), and wherein the spindle (30) has an external thread (34) on an external circumferential portion,
a sleeve (50) having a turntable (58) for the wheel to be temporarily clamped, wherein the sleeve (50) has an internal thread-portion (52), which is in threaded engagement with the external thread-portion (34) of the spindle (30),
stopping/holding means (70) for at least temporarily holding of the sleeve (50), and
clamping means (60) for temporarily fixing a fixing element (40) to the spindle (30), wherein the fixing element (40) is inserted into the mounting-side opening of the spindle (30).

2. The wheel-clamping device as claimed in claim 1,
wherein the sleeve (50) has a turntable part (50a) and a thread part (50b), and wherein the turntable part (50a) is adapted to be movable in its axial direction.

3. The wheel-clamping device as claimed in claim 1 or 2,
wherein the stopping/holding means (70) comprise at least one clutch pack (72).

4. The wheel-clamping device as claimed in claim 3,
wherein the at least one clutch pack (72) applies a first amount of frictional forces onto the sleeve (50) while rotating in a first rotating direction, wherein the at least one clutch pack (72) applies a second amount of frictional forces onto the sleeve (50) while rotating in a second rotating direction, and wherein the second amount of frictional forces is greater than the first amount of frictional forces.

5. The wheel-clamping device as claimed in any one of the claims 1 to 4, wherein the sleeve (50) is connectable to the frame (20) via the stopping/holding means (70), and wherein the stopping/holding means (70) is adapted to be actuated by an actuator means.

6. The wheel-clamping device as claimed in any one of the claims 1 to 5, wherein the clamping means (60) are adapted to be actuated by a movement of the sleeve (50).

7. The wheel-clamping device as claimed in any one of the claims 1 to 6, wherein the clamping means (60) comprises at least one clamping claw (64) and at least one clamping claw actuator (62).

8. The wheel-clamping device as claimed in any one of the claims 1 to 7, wherein the spindle (30) provides at least one spindle recess (30d) extending in at least an axial direction of the spindle (30) to house the clamping means (60).

9. The wheel-clamping device as claimed in claim 8,
wherein two clamping means (60) are provided and arranged to each other in a position of 180° referred to the circumferential direction of spindle (30).

10. A method for reversibly clamping a wheel on a wheel-clamping device for a wheel-service-machine, comprising:
a frame (20) with a through-hole (22),
a spindle (30) being rotatably supported in the through-hole (22) of the frame (20), wherein the spindle (30) has a mounting-side end (30b) being provided with an opening, and a driving-side end (30a), wherein the spindle (30) is connectable at its driving-side end to a drive means provided for a rotary movement of the spindle (30), and wherein the spindle (30) has an external thread (34) on an external circumferential portion,
a sleeve (50) having a turntable (58) for the wheel to be temporarily clamped, wherein the sleeve (50) having an internal-thread-portion (56), which is in threaded engagement with the external thread-portion (34) of the spindle,
stopping/holding-means (70) for at least temporarily holding of the sleeve (50), and
clamping means (60) for temporarily fixing a fixing element (40) to the spindle, wherein the fixing element (40) is inserted into the mounting-side opening of the spindle (30),
wherein a rotation of the spindle (30) in a first rotating direction moves the sleeve (50), which is temporarily rotationally held by the stopping/holding means (70), in a direction towards the wheel, thereby the clamping means (60) is actuated to reversibly fix the rim (R) by the fixing element (40), and wherein a rotation of the spindle (30) in a second rotating direction moves the sleeve (50), which is temporarily rotationally held by the stopping/holding means (70), in a direction away from the wheel, thereby the clamping means (60) is actuated to let loose of the rim (R) by the fixing element (40).

11. The method as claimed in claim 10,
wherein the spindle (30) can rotate the sleeve (50) in the first rotating direction and in the second rotating direction.

12. The method as claimed in any one of the claims 10 or 11,
wherein the stopping/holding means (70) comprise at least one clutch pack (72), and wherein the at least one clutch pack (72) applies a first amount of frictional forces onto the sleeve (50) while rotating in a first rotating direction, wherein the at least one clutch pack (72) applies a second amount of frictional forces onto the sleeve (50) while rotating in a second rotating direction, and wherein the second amount of frictional forces is greater than the first amount of frictional forces

13. The method as claimed in any one of the claims 10 to 12,
wherein the clamping means (60) is adapted to be actuated by the movement of the sleeve (50).

14. The method as claimed in any one of the claims 10 to 13,
wherein the clamping means (60) comprise at least one clamping claw (64) and at least one clamping claw actuator (62), and wherein the sleeve (50) acts on the at least one clamping claw actuator (62).

15. The method as claimed in claim 14,
wherein the at least one clamping claw actuator (62), being actuated by the movement of the sleeve (50), actuates the at least one clamping claw (64) to clamp the fixing element (40).

16. The method as claimed in any one of the claims 14 to 15,
wherein the at least one clamping claw (64) is adapted to be spring loaded by a spring (66), and wherein the at least one clamping claw (64) tends to engage a threaded rod (42) being part of the fixing element (40), as a result of the spring load.
